# EUROPEAN PATENT APPLICATION

(11) **EP 4 661 224 A1**
(43) Date of publication of application: **10.12.2025**
(21) Application number: 25305797.0
(22) Date of filing: 03.06.2025
(51) Int. Cl.: H02B 1/36, H02B 1/21

(54) **DISTRIBUTION BOX FOR POWER DISTRIBUTION CABINET AND POWER DISTRIBUTION CABINET**

(30) Priority: 04.06.2024 CN 202421264304 U
(71) Applicant: SCHNEIDER ELECTRIC INDUSTRIES SAS, 92500 Rueil-Malmaison (FR)
(72) Inventor: LIU, Kun, Shanghai, 201203 (CN); LI, Huaying, Shanghai, 201203 (CN); BI, Baoyun, Shanghai, 201203 (CN)
(74) Representative: Manitz Finsterwald Patent- und Rechtsanwaltspartnerschaft mbB

(57) **Abstract**

Embodiment of the disclosure provides a distribution box for a power distribution cabinet and a power distribution cabinet. The distribution box includes a box body, a circuit board, a second connection assembly and a plurality of first connection assemblies. The box body includes a first opening, a second opening and an accommodating cavity. The circuit board is arranged in the accommodating cavity and coupled to the box body. The plurality of first connection assemblies are arranged at the first opening, and the plurality of first connection assemblies are coupled to the circuit board. The second connection assembly is arranged at the second opening, and the second connection assembly is coupled to the circuit board. The second connection assembly may be electrically connected to the plurality of first connection assemblies via the circuit board, and the second connection assembly is also adapted to be electrically connected to the external device.

## Description

### FIELD

Embodiments of the present disclosure generally relate to the field of electrical equipment, and in particular, to a distribution box for a power distribution cabinet and a power distribution cabinet.

### BACKGROUND

A power distribution cabinet with a drawer-type structure is particularly common. By arranging two or more extractable drawer assemblies on the same layer, the modularization and standardization of power distribution units may be achieved. The drawer assemblies usually include electrical components such as circuit breakers, contactors, relays, electric energy meters, fuses, transformers and the like. Each drawer serves as an independent functional unit, and may be conveniently installed, replaced or overhauled without affecting the normal operation of other drawers. In a conventional drawer-type power distribution cabinet, as the number of drawer assemblies arranged in the same layer increases, the number of wires for a control loop often far exceeds the number of wires of a main loop due to involving a large number of signal acquisition, control instruction transmission and protection loops. This forms dense and complex wire harnesses, which seriously occupy the space inside the distribution box. The difficulty of assembling the wire harnesses is high, and the expansion of the number of the drawer assemblies is also limited.

### SUMMARY

Embodiments of the present disclosure provide a distribution box for a power distribution cabinet and a power distribution cabinet to at least partially solve the above problems and other potential problems.

In a first aspect of the present disclosure provides a distribution box for a power distribution cabinet. The distribution box includes a box body including a first opening arranged on a side of the box body adjacent to a plurality of drawer assemblies; a second opening arranged on a side of the box body away from the plurality of drawer assemblies; and an accommodating cavity; and a circuit board arranged in the accommodating cavity and coupled to the box body; a plurality of first connection assemblies arranged at the first opening, the plurality of first connection assemblies being coupled to the circuit board and adapted to be electrically connected to an electrical device within a corresponding drawer assembly; and a second connection assembly arranged at the second opening, the second connection assembly being coupled to the circuit board and adapted to be electrically connected to the plurality of first connection assemblies via the circuit board, and the second connection assembly being adapted to be electrically connected to an external device.

**In** some embodiments, each of the first connection assemblies includes a first digital output interface and a first digital input interface, and the second connection assembly includes a second digital output interface adapted to be electrically connected to the first digital input interface via the circuit board; and a second digital input interface adapted to be electrically connected to the first digital output interface via the circuit board.

In some embodiments, the distribution box further includes a plurality of modular sockets arranged at the first opening and coupled to the box body and adapted to integrate the first digital output interface and the first digital input interface of the plurality of first connection assemblies in a one-to-one correspondence.

In some embodiments, each of the first digital output interface, the first digital input interface, the second digital output interface and the second digital input interface is a multi-pin connector.

In some embodiments, the circuit board includes a network bus, and the network bus includes a first end and a second end; each of the modular sockets further includes a first network interface, and the distribution box further includes a plurality of second network interfaces arranged on a side of the circuit board facing the second opening and electrically connected to the network bus, and the plurality of second network interfaces being electrically connected to the plurality of first network interfaces in a one-to-one correspondence; a network inlet interface arranged at the second opening and electrically connected to the first end of the network bus; and a network outlet interface arranged at the second opening and electrically connected to the second end of the network bus.

In some embodiments, the plurality of second network interfaces are connected in parallel with the network bus.

In some embodiments, the distribution box further includes a plurality of first connection elements coupled to the circuit board and adapted to be electrically connected to the plurality of first digital output interfaces in a one-to-one correspondence; and a plurality of second connection elements coupled to the circuit board and adapted to be electrically connected to the plurality of first digital input interfaces in a one-to-one correspondence.

In some embodiments, each of the modular sockets includes: a body; and a connection portion arranged at an edge of the body and detachably connected to an edge of the box body corresponding to the first opening.

In some embodiments, each of the modular sockets further includes: a guiding portion including a fixed end and a free end, the fixed end being coupled to the connection portion, the free end being farther away from the connection portion than the fixed end, and being adapted to guide a communication interface of the corresponding drawer assembly to interface with the modular socket.

In some embodiments, the free end of the guiding portion is a tip.

In some embodiments, the box body further includes: a third opening arranged on a side of the box body adjacent to the plurality of drawer assemblies; a fourth opening arranged on a side of the box body away from the plurality of drawer assemblies, and adapted to arrange an outgoing primary wire; and a fifth opening arranged on a side of the box body away from the plurality of drawer assemblies; and the distribution box further includes: a plurality of primary inlet busbars disposed in parallel and arranged at the third opening and coupled to the accommodating cavity of the box body; a plurality of primary outlet interfaces arranged at the first opening and coupled to the box body; and a plurality of busbar clamps arranged at the fifth opening and electrically connected to the plurality of primary inlet busbars in a one-to-one correspondence, and adapted to enable a power supply busbar to supply power to the plurality of primary inlet busbars.

In some embodiments, the plurality of primary outlet interfaces are integrated on the plurality of modular sockets in a one-to-one correspondence.

In some embodiments, the circuit board is provided with a through hole, and the distribution box further includes: a plurality of conductive connecting members inserted into the through hole and electrically connected to the plurality of primary inlet busbars and the plurality of busbar clamps in a one-to-one correspondence.

In some embodiments, the distribution box further includes a pair of insulating support members arranged in parallel at two ends of the plurality of primary inlet busbars to support the plurality of primary inlet busbars.

In a second aspect of the present disclosure provides a power distribution cabinet. The power distribution cabinet includes a cabinet body, a distribution box according to the first aspect of the present disclosure, wherein the distribution box is coupled to the cabinet body; and a plurality of drawer assemblies arranged on a side adjacent to the first opening of the distribution box, and each of the plurality of drawer assemblies being detachably connected to the cabinet body.

In embodiments of the present disclosure, the distribution box includes a box body, a circuit board, a plurality of first connection assemblies, and a second connection assembly. The box body includes a first opening, a second opening, and an accommodating cavity. The first opening is arranged on a side of the box body adjacent to the plurality of drawer assemblies. The second opening is arranged on a side of the box body away from the plurality of drawer assemblies. The circuit board is arranged in the accommodating cavity and coupled to the box body. The plurality of first connection assemblies are arranged at the first opening and are coupled to the circuit board. The second connection assembly is arranged at the second opening and coupled to the circuit board. The second connection assembly is adapted to be electrically connected to the plurality of first connection assemblies via the circuit board, and the second connection assembly is adapted to be electrically connected to the external device. With this arrangement, the circuit board may replace dense and complex secondary wire harnesses in the distribution box. The second connection assembly replaces a reserved wire harness joint for connecting to the external device. The space in the distribution box occupied by the secondary wire harnesses may be reduced, and the difficulty of assembling the wire harnesses may be decreased. Meanwhile, the distribution box will not limit the number of the first connection assemblies and the number of drawer assemblies in the same layer due to overcrowding of the secondary wires.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a perspective view of a distribution box for a power distribution cabinet according to an embodiment of the present disclosure, in which a first opening is shown.
FIG. 2 illustrates a perspective view of a distribution box for a power distribution cabinet according to an embodiment of the present disclosure, in which a second opening is shown.
FIG. 3 illustrates a perspective view of a box body according to an embodiment of the present disclosure, in which a first opening is shown.
FIG. 4 illustrates a perspective view of a box body according to an embodiment of the present disclosure, in which a second opening is shown.
FIG. 5 illustrates a perspective view of a modular socket, a circuit board, and a primary inlet busbar according to an embodiment of the present disclosure, wherein the modular socket is shown on the front side.
FIG. 6 illustrates a perspective view of a modular socket, a circuit board, and a primary inlet busbar according to an embodiment of the present disclosure, wherein the circuit board is shown on the front side. and
FIG. 7 illustrates a perspective view of a modular socket according to an embodiment of the present disclosure.

### Description of Reference Numerals:

100, distribution box;
10, box body; 11, first opening; 12, second opening; 13, third opening; 14, fourth opening; 15, fifth opening; 16, accommodating cavity;
20, circuit board; 21, through hole;
30, first connection assembly; 31, first digital output interface; 32, first digital input interface;
40, second connection assembly; 41, second digital output interface; 42, second digital input interface;
50, modular socket; 51, body; 52, connection portion; 53, guiding portion;
61, first network interface; 62, second network interface; 63, network inlet interface; 64, network outlet interface;
71, first connection element; 72, second connection element;
81, primary inlet busbar; 82, primary outlet interface; 83, busbar clamp; 84, conductive connecting member; 85, insulating support member.

### DETAILED DESCRIPTION

Embodiments of the present disclosure will be described in more detail below with reference to the accompanying drawings. While the embodiments of the present disclosure are shown in the drawings, it should be understood that the present disclosure may be implemented in various forms and should not be limited by the embodiments set forth herein. Rather, these embodiments are provided to make this disclosure more thorough and complete, and to fully convey the scope of the present disclosure to those skilled in the art.

As used herein, the term "comprising" and variations thereof represent openness, i.e., "including but not limited to". Unless specifically stated, the term "or" means "and / or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

As described above, in a conventional drawer-type power distribution cabinet, as the number of drawer assemblies arranged in the same layer increases, the number of wires for a control loop often far exceeds the number of wires of a main loop due to involving a large number of signal acquisition, control instruction transmission and protection loops. This forms dense and complex wire harnesses, which seriously occupy the space inside the distribution box. The difficulty of assembling the wire harnesses is high, and the expansion of the number of the drawer assemblies is also limited.

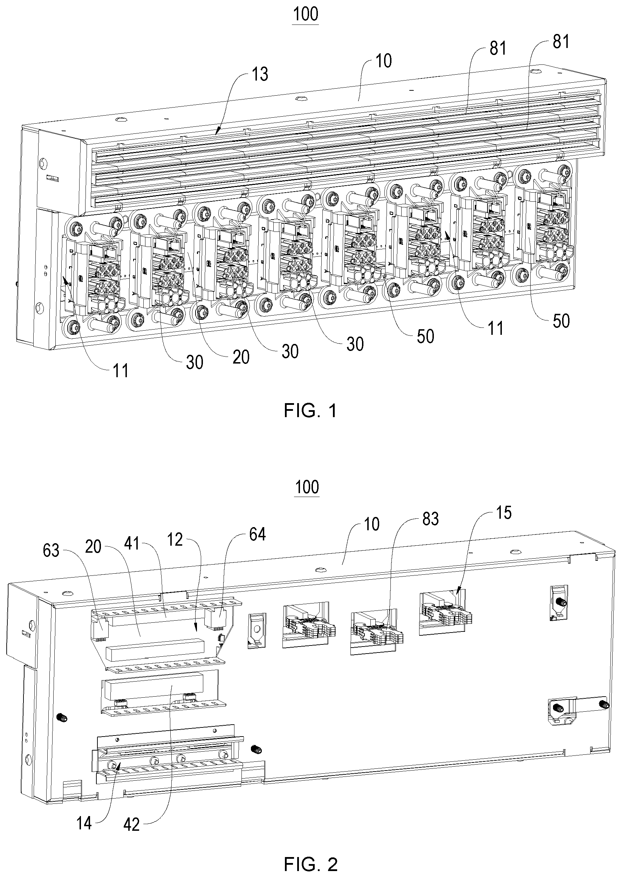

Embodiments of the present disclosure provide a distribution box 100 for a power distribution cabinet and a power distribution cabinet. A circuit board 20, a second connection assembly 40 and a plurality of first connection assemblies 30 are provided in the distribution box 100. With this arrangement, the circuit board 20 may replace the dense and complex secondary wire harnesses in the distribution box 100. The second connection assembly 40 replaces the reserved wire harness joint of the secondary wire for connecting to the external device. The space in the distribution box 100 occupied by the secondary wire harnesses may be reduced, and the difficulty of assembling the wire harnesses may be decreased. Meanwhile, the distribution box 100 will not limit the number of the first connection assemblies 30 and the number of the drawer assemblies due to overcrowding of the secondary wire harnesses. That is, the number of the drawer assemblies arranged in the same layer of the power distribution cabinet may be expanded as required. The principles of the present disclosure will be described in detail below with reference to FIGS. 1 to 7.

As shown in FIGS. 1 to 4, the distribution box 100 includes a box body 10, a circuit board 20, a second connection assembly 40, and a plurality of first connection assemblies 30. The box body 10 is the main structure of the distribution box 100, which has a specific layout and openings for integrating and protecting the internal electronic components, and for enabling the internal electronic components to cooperate with other devices. The box body 10 includes a first opening 11, a second opening 12, and an accommodating cavity 16. The first opening 11 is arranged on a side of the box body 10 adjacent to a plurality of drawer assemblies, and each of the drawer assemblies is a pluggable module, which makes it convenient for the user to access or replace the internal electrical devices of the drawer assemblies. The second opening 12 is opposite to the first opening 11 and arranged on a side of the box body 10 away from the plurality of drawer assemblies. The accommodating cavity 16 is adapted to accommodate electronic components (such as the circuit board 20 described below).

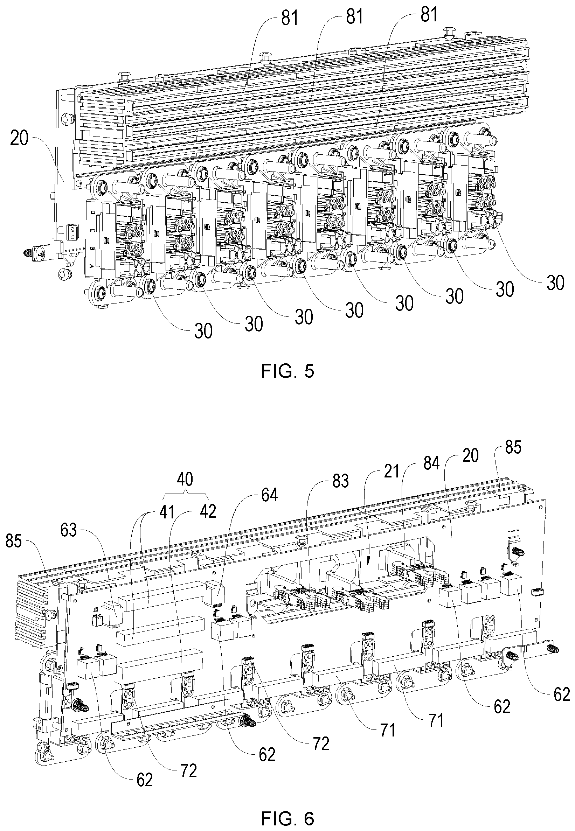

Referring to FIGS. 5 to 6, the circuit board 20 is arranged in the accommodating cavity 16. The circuit board 20 is a core component of the distribution box 100 and may carry various electronic components (such as chips, resistors, capacitors, interfaces, etc.). The circuit board 20 is responsible for functions such as transmission, processing, or distribution of signals. The circuit board 20 may be fixed to the box body 10 in a physical connection manner (such as welding, inserting slots, etc.).

As shown in FIG. 1, the plurality of first connection assemblies 30 are arranged at the first opening 11. The plurality of first connection assemblies 30 are coupled to the circuit board 20. The plurality of first connection assemblies 30 may be electrically connected to an electrical device in the corresponding drawer assembly. The second connection assembly 40 is arranged at the second opening 12. The second connection assembly 40 is coupled to the circuit board 20. The second connection assembly 40 is adapted to be electrically connected to the plurality of first connection assemblies 30 via the circuit board 20. The second connection assembly 40 may be electrically connected to the external devices. Each of the first connection assemblies 30 and the second connection assembly 40 may include optical fiber interfaces, RJ45 network interfaces, or other types of connectors, such that the distribution box 100 may access a wider network or signal source.

With this arrangement, the circuit board 20 may replace the dense and complex secondary wire harnesses in the distribution box 100. The second connection assembly 40 replaces a reserved wire harness joint of the secondary wire for connecting to the external device. The space in the distribution box 100 occupied by the secondary wire harnesses may be reduced, and the difficulty of assembling the wire harnesses may be decreased. Meanwhile, the number of the first connection assemblies 30 and the number of the drawer assemblies will not be limited due to overcrowding of the secondary wire harnesses. In other words, the number of the drawer assemblies arranged on the same layer of the power distribution cabinet may be expanded as required.

For example, a conventional distribution box may at most meet the arrangement of the secondary wires of four drawer assemblies in the same layer, while the distribution box 100 provided by the embodiments of the present disclosure may meet the arrangement of the wire harnesses of more than four drawer assemblies. As shown in FIGS. 1-6, the distribution box 100 may meet the arrangement of wire harnesses of eight drawer assemblies.

In some embodiments, the number of the second connection assemblies 40 is one. That is, the second connection assembly 40 may be integrated onto one communication joint to facilitate quick connection to the external device.

In some alternative embodiments, the number of the second connection assemblies 40 may be multiple. The plurality of second connection assemblies 40 are connected to the plurality of first connection assemblies 30 in a one-to-one correspondence via the circuit board 20. In this way, the classified transmission of signals may be achieved.

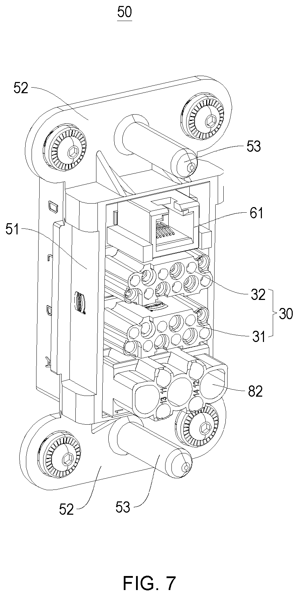

In some embodiments, as shown in FIG. 7, each of the first connection assemblies 30 includes a first digital output interface 31 and a first digital input interface 32. As shown in FIG. 2, the second connection assembly 40 includes a second digital output interface 41 and a second digital input interface 42. The second digital output interface 41 is electrically connected to the first digital input interface 32 via the circuit board 20, and the second digital input interface 42 is electrically connected to the first digital output interface 31 via the circuit board 20. In this way, the first digital output interface 31, the first digital input interface 32, the circuit board 20, the second digital output interface 41, and the second digital input interface 42 collectively establish a communication loop between the external device and the electrical devices within the plurality of drawer assemblies.

That is, signals sent by the external device may be sent to the electrical devices in the corresponding drawer assembly through the second digital input interface 42, the circuit board 20, and the first digital output interface 31 in sequence. The signals are processed or fed back by the electrical device, and then sent to the external device via the first digital input interface 32, the circuit board 20 and the second digital output interface 41, so that a complete closed loop for the signal may be formed between the external device and the electrical device within the drawer assembly.

In some embodiments, as shown in FIG. 1, the distribution box 100 further includes a plurality of modular sockets 50. The plurality of modular sockets 50 are mounted at the first opening 11 and are coupled to the box body 10. The plurality of modular sockets 50 integrate the first digital output interface 31 and the first digital input interface 32 of the plurality of first connection assemblies 30 in a one-to-one correspondence.

As shown in FIG. 1, on the basis of the original structure of the distribution box 100, the plurality of modular sockets 50 are further added. The modular sockets 50 may add, replace, or reconfigure different functional modules as required to adapt to different application scenarios or technical changes. For example, when a new type interface is required due to system updates, it may be directly installed on the modular socket 50.

As shown in FIG. 1, the modular sockets 50 correspond to the previously mentioned position of the first opening 11. In this way, the connection from the drawer assembly to the modular sockets 50 is more direct and convenient, and it is also more convenient for an operator to perform plug-in and unplug operations. The modular sockets 50 are tightly connected to the box body 10, ensuring structural stability and durability of the distribution box 100. The modular sockets 50 and the box body 10 may be connected by buckles, screws or in other reliable ways, so that the modular socket 50 may be prevented from loosening or falling off during use.

As shown in FIG. 7, the plurality of first connection assemblies 30 and the plurality of modular sockets 50 are in a one-to-one correspondence. That is, the first digital output interface 31 and the first digital input interface 32 of each first connection assembly 30 are integrated into one modular socket 50. In this way, the electrical devices in each drawer assembly may be connected to the distribution box 100 through the corresponding first digital input interface 32 and first digital output interface 31. These digital interfaces usually support high-speed data transmission and meet the communication requirements of modern electronic devices.

In some embodiments, as shown in FIGS. 1 and 7, each of the first digital output interface 31, the first digital input interface 32, the second digital output interface 41, and the second digital input interface 42 is a multi-pin connector. With this arrangement, firstly, multiple signals or power wires may be transmitted simultaneously, which improves the overall efficiency of the system. Secondly, the multi-pin connector has good wear resistance and conductivity, ensuring stable contact in long-term use, and reducing the risk of signal attenuation or interruption. Furthermore, the industrial-grade multi-pin connector has a high waterproof grade (such as IP65, IP67 or even IP68), enabling the multi-pin connector to maintain good sealing performance in a severe environment, preventing moisture and dust from entering, and extending their service life.

In some alternative embodiments, the first digital output interface 31, the first digital input interface 32, the second digital output interface 41, and the second digital input interface 42 may be optical fiber interfaces, Thunderbolt interfaces, DisplayPort interfaces, USB Type-C interfaces, and the like.

In some embodiments, the circuit board 20 includes a network bus. The network bus includes a first end and a second end. The length of the network bus within the circuit board 20 and its arrangement position may be set as required.

As shown in FIG. 7, each of the modular sockets 50 further includes a first network interface 61 for electrically connecting to an electrical device within the drawer assembly. The distribution box 100 further includes a network inlet interface 63, a network outlet interface 64, and a plurality of second network interfaces 62. The plurality of second network interfaces 62 are arranged on a side of the circuit board 20 facing the second opening 12, and the plurality of second network interfaces 62 are electrically connected to the network bus. The plurality of second network interfaces 62 may be electrically connected to the plurality of first network interfaces 61 in a one-to-one correspondence. The network inlet interface 63 and the network outlet interface 64 are arranged at the second opening 12. The network inlet interface 63 is electrically connected to the first end of the network bus, and the network outlet interface 64 is electrically connected to the second end of the network bus.

In this way, external devices may be electrically connected to electrical devices in each of the drawer assembly respectively. Through network signal transmission, the working states and operation data of components in the power distribution cabinet may be collected in real time, such as voltage, current, power factor, electric energy consumption and other information. Firstly, the management personnel may remotely monitor the operation status of a power distribution system, discover and process faults in time, thereby improving the power grid management efficiency and response speed. Secondly, an integrated intelligent system may analyze the collected data and automatically diagnose potential electrical problems, such as overload, short circuit, electric leakage and the like. It may issue early warning in advance, effectively prevent accidents, and ensure the safety and stability of power supply. Moreover, the maintenance personnel may remotely control switching devices in the power distribution cabinet and perform parameter setting or operation control via the network, so that on-site operation is not required, reducing the labor cost and the maintenance difficulty, especially at a remote or difficult-to-reach place.

In some embodiments, as shown in FIG. 6, the plurality of second network interfaces 62 are connected in parallel with the network bus. With this arrangement, the length of the network bus may be reduced, and the communication quality may be improved. It is also possible to connect a single network interface to the drawer assembly. In this way, a network interface and a bypass switch may be reduced, so that the material cost is reduced.

In some embodiments, as shown in FIGS. 6 and 7, the first network interface 61 and the second network interface 62 may be RJ45 interfaces. In this way, high compatibility and universality are achieved and a certain degree of cable fault may be allowed, which helps to maintain a more stable network connection and reduce network interruptions caused by physical connection problems.

In some embodiments, as shown in FIG. 6, the distribution box 100 further includes a plurality of first connection elements 71 and a plurality of second connection elements 72. The first connection elements 71 are connected to the circuit board 20. The first connection elements 71 may be pins, joints, sockets, or the like. The second connection elements 72 are similar to the first connection elements 71, and may be also connection points on the circuit board 20. The second connection elements 72 may be utilized to establish an electrical connection. The plurality of first connection elements 71 are electrically connected to the plurality of first digital output interfaces 31 in a one-to-one correspondence. The plurality of second connection elements 72 are electrically connected to the plurality of first digital input interfaces 32 in a one-to-one correspondence. With this arrangement, the circuit board 20 and the plurality of first digital output interfaces 31 may be electrically connected by using the first connection element 71 and the second connection element 72 on the circuit board 20, and the circuit board 20 is also electrically connected to the plurality of first digital input interfaces 32. The first connection elements 71 and the second connection elements 72 realize precise correspondence and transmission of the external signal to the internal circuit of the drawer assembly and the internal circuit of the drawer assembly to the external device, so that the signal may be transmitted between different devices in an orderly and clear manner. It is suitable for application scenarios that need to process multiple digital signal inputs and outputs simultaneously.

In some embodiments, as shown in FIG. 7, each of the modular sockets 50 includes a body 51 and connection portions 52. The body 51 is adapted to integrate the first connection assembly 30 and the first network interface 61, and so on. The connection portions 52 are arranged at an edge of the body 51, and the connection portions 52 are detachably connected to an edge of the box body 10 corresponding to the first opening 11.

As shown in FIG. 7, the connection portions 52 are respectively provided at edges of the upper and lower sides of the body 51. Each of the connection portions 52 is provided with a screw hole. The connection portions 52 on the upper side of the body 51 may be mounted above the first opening 11 by bolts, and the connection portions 52 on the lower side of the body 51 may be mounted below the first opening 11. In this way, the body 51 corresponds to the position of the first opening 11. The front side of the first connection assembly 30 and the first network interface 61 face toward the drawer assembly, and may be connected to the communication interface of the drawer assembly. The rear side of the first connection assembly 30 and the first network interface 61 face toward the circuit board 20 in the box body 10, and may be electrically connected to the circuit board 20.

In some embodiments, as shown in FIG. 7, each of the modular sockets 50 further includes a guiding portion 53. The guiding portion 53 includes a fixed end and a free end. The fixed end of the guiding portion 53 is mounted on the connection portions 52, the free end of the guiding portion 53 is farther away from the connection portions 52 than the fixed end, and it may guide the communication interface of the corresponding drawer assembly to interface with the modular socket 50.

As shown in FIG. 7, the guiding portion 53 may be a guide rod. One end of the guide rod is fixed on the connection portions 52, and the other end of the guide rod is arranged towards the drawer assembly. When the operator pushes the drawer assembly into the power distribution cabinet, the guide rod may be inserted into a guide hole on the corresponding drawer assembly. Through cooperation of the guide rod and the guide hole, the communication interface on the drawer assembly may be accurately aligned with the modular socket 50 to stably transmit signals.

In some alternative embodiments, the guiding portion 53 may be a guide slide rail or a guide groove. When the drawer assembly is pushed into the power distribution cabinet, the guide slide rail or the guide groove may guide the communication interface of the drawer assembly to interface with the modular socket 50.

In some embodiments, as shown in FIG. 7, the free end of the guiding portion 53 is a tip. With this arrangement, the free end may be more precisely inserted into or docked with corresponding holes or slots of the drawer assembly, facilitating accurate positioning. Secondly, the tip may reduce the friction during insertion, making the assembly process smoother.

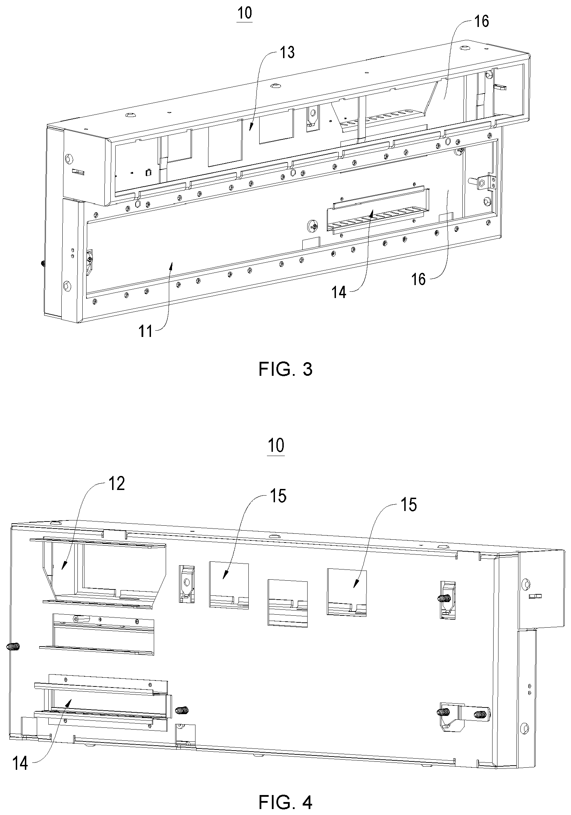

In some embodiments, as shown in FIGS. 3 and 4, a third opening 13 is provided on a side of the box body 10 adjacent to the plurality of drawer assemblies. A fourth opening 14 and a fifth opening 15 are provided on a side of the box body 10 away from the plurality of drawer assemblies. The fourth opening 14 is adapted to accommodate the outgoing primary wire.

As shown in FIGS. 5 and. 6, the distribution box 100 further includes a plurality of primary inlet busbars 81, a plurality of primary outlet interfaces 82, and a plurality of busbar clamps 83. The plurality of primary inlet busbars 81 are disposed in parallel and are arranged at the third opening 13. The plurality of primary inlet busbars 81 are mounted in the accommodating cavity 16 of the box body 10. The plurality of primary outlet interfaces 82 are arranged at the first opening 11, and the plurality of primary outlet interfaces 82 are coupled to the box body 10. The plurality of busbar clamps 83 are arranged at the fifth opening 15, and the plurality of busbar clamps 83 are electrically connected to the plurality of primary inlet busbars 81 in a one-to-one correspondence, so as to enable the power busbar to supply power to the plurality of primary inlet busbars 81.

As shown in FIGS. 5 and 6, the distribution box 100 is further provided with a circuit element for primary wire routing, which may ensure that power may be efficiently and safely transmitted from the main power source (also referred to as a power supply busbar) to different drawer assemblies. The plurality of primary inlet busbars 81 are the main power channels of the distribution box 100. The plurality of primary inlet busbars 81 are arranged in parallel to facilitate managing and increasing the capacity of the circuit. The plurality of primary inlet busbars 81 are arranged at the third opening 13 of the distribution box 100.

Each of the busbar clamps 83 is an electrical connector that ensures good electrical contact by fastening or other means, thereby avoiding loss or potential safety hazards during power transmission. The plurality of busbar clamps 83 are arranged at the fifth opening 15, and the plurality of busbar clamps 83 may realize safe and reliable power supply of the power supply busbar (that is, the conductive strip on the main power supply side) to each primary inlet busbar 81.

With this arrangement, when the drawer assembly abuts against the distribution box 100, a primary wire inlet joint on each drawer assembly may be electrically connected to the corresponding primary inlet busbar 81. A primary wire outlet joint on each drawer assembly may be electrically connected to the corresponding primary outlet interface 82 at the first opening 11, thereby forming a primary wire loop, which may provide load electricity for an electrical device in the drawer assembly. At the same time, the rear side of the primary outlet interface 82 is connected to an primary outlet wire, and the primary outlet wire is led out of the distribution box 100 through the fourth opening 14.

In some embodiments, as shown in FIG. 7, the plurality of primary outlet interfaces 82 are integrated on the plurality of modular sockets 50 in a one-to-one correspondence. With this arrangement, when the drawer assembly abuts against the distribution box 100, the communication interface of the drawer assembly is connected to the first connection assembly 30, the primary wire inlet joint of the drawer assembly is connected to the primary inlet busbar 81, and the primary wire outlet joint of the drawer assembly may be connected to the primary outlet interface 82. The operator only needs to perform a simple drawing or pushing operation on the drawer assembly to disconnect and connect a primary wire loop and a secondary wire loop , which makes it convenient for use.

In some embodiments, as shown in FIG. 6, the circuit board 20 is provided with through holes 21. The distribution box 100 further includes a plurality of conductive connecting members 84. The plurality of conductive connecting members 84 are inserted into the through holes 21, and the plurality of conductive connecting members 84 are electrically connected to the plurality of primary inlet busbar 81 and the plurality of busbar clamps 83 in a one-to-one correspondence.

As shown in FIG. 6, the plurality of primary inlet busbars 81 are arranged on a side of the circuit board 20 facing the drawer assembly, and the plurality of busbar clamps 83 are arranged on a side of the circuit board 20 away from the drawer assembly. Through forming the through holes 21 in the circuit board 20, the plurality of busbar clamps 83 may be connected to the plurality of primary inlet busbars 81 through the plurality of conductive connecting members 84 arranged in the through holes 21, so that the length of the conductive connecting member 84 may be reduced, the circuit layout is simplified, and the material cost is saved.

In some embodiments, as shown in FIG. 6, the distribution box 100 further includes two insulating support members 85. The two insulating support members 85 are arranged in parallel at two ends of the plurality of primary inlet busbars 81 and may support the plurality of primary inlet busbars 81. With this arrangement, the insulating support members 85 may provide physical support and electrical isolation, and may maintain a necessary electrical isolation between the plurality of primary inlet busbars 81 and the box body 10 or other electrical components to prevent the occurrence of a short circuit or an electric shock accident. At the same time, the two insulating support members 85 may also bear the weight of the plurality of primary inlet busbars 81 and prevent the position deviation or deformation caused by gravity.

In a second aspect of the present disclosure, a power distribution cabinet is provided. The power distribution cabinet includes a cabinet body, a plurality of drawer assemblies and a distribution box 100 according to the first aspect of the present disclosure. The cabinet body is provided with an accommodating space, and one side of the cabinet body is provided with an opening. The distribution box 100 is installed in the cabinet body. The plurality of drawer assemblies are arranged on a side adjacent to the first opening 11 of the distribution box 100, and any of the plurality of drawer assemblies is detachably connected to the cabinet body, that is, withdrawn from the opening or pushed into the accommodating space of the cabinet body. With this arrangement, the circuit board 20 of the distribution box 100 may replace the dense and complex secondary wire harnesses in the distribution box 100, the second connection assembly 40 replaces the reserved wire harness joint of the secondary wire for connecting to the external device, the space in the distribution box 100 occupied by the secondary wire harnesses may be reduced, and the difficulty of assembling the wire harnesses may be decreased. Meanwhile, the number of the first connection assemblies 30 and the number of the drawer assemblies will not be limited due to overcrowding of the secondary wire harnesses. In other words, the number of the drawer assemblies arranged on the same layer of the power distribution cabinet may be expanded as required.

When the drawer assembly abuts against the distribution box 100, the communication interface of the drawer assembly may be connected to the first connection assembly 30. The primary wire inlet joint of the drawer assembly may be connected to the primary inlet busbar 81, and the primary wire outlet joint of the drawer assembly may be connected to the primary outlet interface 82. The operator only needs to perform a simple drawing or pushing operation on the drawer assembly, so that the disconnection and connection of the primary wire loop and the secondary wire loop may be realized, which makes it convenient for use.

Various embodiments of the present disclosure have been described above, which are exemplary, not exhaustive, and are not limited to the embodiments disclosed. Many modifications and variations will be apparent to those of ordinary skill in the art without departing from the scope and spirit of the illustrated embodiments. The selection of the terms used herein is intended to best explain the principles of the embodiments, practical applications, or technical improvements in the marketplace, or to enable others of ordinary skill in the art to understand the embodiments disclosed herein.

## Claims

1. A distribution box (100) for a power distribution cabinet, **characterized by** comprising:
a box body (10) comprising:
a first opening (11) arranged on a side of the box body (10) adjacent to a plurality of drawer assemblies;
a second opening (12) arranged on a side of the box body (10) away from the plurality of drawer assemblies; and
an accommodating cavity (16); and
a circuit board (20) arranged in the accommodating cavity (16) and coupled to the box body (10);
a plurality of first connection assemblies (30) arranged at the first opening (11), the plurality of first connection assemblies (30) being coupled to the circuit board (20) and adapted to be electrically connected to an electrical device within a corresponding drawer assembly; and
a second connection assembly (40) arranged at the second opening (12), the second connection assembly (40) being coupled to the circuit board (20) and adapted to be electrically connected to the plurality of first connection assemblies (30) via the circuit board (20), and the second connection assembly (40) being adapted to be electrically connected to an external device.

2. The distribution box (100) according to claim 1, **characterized in that** each of the first connection assemblies (30) comprises a first digital output interface (31) and a first digital input interface (32), and the second connection assembly (40) comprises:
a second digital output interface (41) adapted to be electrically connected to the first digital input interface (32) via the circuit board (20); and
a second digital input interface (42) adapted to be electrically connected to the first digital output interface (31) via the circuit board (20).

3. The distribution box (100) according to claim 2, **characterized by** further comprising:
a plurality of modular sockets (50) arranged at the first opening (11) and coupled to the box body (10), and adapted to integrate the first digital output interface (31) and the first digital input interface (32) of the plurality of first connection assemblies (30) in a one-to-one correspondence.

4. The distribution box (100) according to claim 2, **characterized in that** each of the first digital output interface (31), the first digital input interface (32), the second digital output interface (41) and the second digital input interface (42) is a multi-pin connector.

5. The distribution box (100) according to claim 3, **characterized in that** the circuit board (20) comprises a network bus, and the network bus comprises a first end and a second end; each of the modular sockets (50) further comprises a first network interface (61), and the distribution box (100) further comprises:
a plurality of second network interfaces (62) arranged on a side of the circuit board (20) facing the second opening (12) and electrically connected to the network bus, and the plurality of second network interfaces (62) being electrically connected to the plurality of first network interfaces (61) in a one-to-one correspondence;
a network inlet interface (63) arranged at the second opening (12) and electrically connected to the first end of the network bus; and
a network outlet interface (64) arranged at the second opening (12) and electrically connected to the second end of the network bus.

6. The distribution box (100) according to claim 5, **characterized in that** the plurality of second network interfaces (62) are connected in parallel with the network bus.

7. The distribution box (100) according to any of claims 2 to 6, **characterized by** further comprising:
a plurality of first connection elements (71) coupled to the circuit board (20) and adapted to be electrically connected to the plurality of first digital output interfaces (31) in a one-to-one correspondence; and
a plurality of second connection elements (72) coupled to the circuit board (20) and adapted to be electrically connected to the plurality of first digital input interfaces (32) in a one-to-one correspondence.

8. The distribution box (100) according to any of claims 3, 5 and 6, **characterized in that** each of the modular sockets (50) comprises:
a body (51); and
a connection portion (52) arranged at an edge of the body (51) and detachably connected to an edge of the box body (10) corresponding to the first opening (11).

9. The distribution box (100) according to claim 8, **characterized in that** each of the modular sockets (50) further comprises:
a guiding portion (53) comprising a fixed end and a free end, the fixed end being coupled to the connection portion (52), the free end being farther away from the connection portion (52) than the fixed end, and being adapted to guide a communication interface of the corresponding drawer assembly to interface with the modular socket (50).

10. The distribution box (100) according to claim 9, **characterized in that** the free end of the guiding portion (53) is a tip.

11. The distribution box (100) according to any of claims 3, 5 and 6, **characterized in that** the box body (10) further comprises:
a third opening (13) arranged on a side of the box body (10) adjacent to the plurality of drawer assemblies;
a fourth opening (14) arranged on a side of the box body (10) away from the plurality of drawer assemblies, and adapted to arrange an outgoing primary wire; and
a fifth opening (15) arranged on a side of the box body (10) away from the plurality of drawer assemblies; and
the distribution box (100) further comprises:
a plurality of primary inlet busbars (81) disposed in parallel, arranged at the third opening (13) and coupled to the accommodating cavity (16) of the box body (10);
a plurality of primary outlet interfaces (82) arranged at the first opening (11) and coupled to the box body (10); and
a plurality of busbar clamps (83) arranged at the fifth opening (15) and electrically connected to the plurality of primary inlet busbars (81) in a one-to-one correspondence, and adapted to enable a power supply busbar to supply power to the plurality of primary inlet busbars (81).

12. The distribution box (100) according to claim 11, **characterized in that** the plurality of primary outlet interfaces (82) are integrated on the plurality of modular sockets (50) in a one-to-one correspondence.

13. The distribution box (100) according to claim 11, **characterized in that** the circuit board (20) is provided with a through hole (21), and the distribution box (100) further comprises:
a plurality of conductive connecting members (84) inserted into the through hole (21) and electrically connected to the plurality of primary inlet busbars (81) and the plurality of busbar clamps (83) in a one-to-one correspondence.

14. The distribution box (100) according to claim 11, **characterized by** further comprising:
a pair of insulating support members (85) arranged in parallel at two ends of the plurality of primary inlet busbars (81) to support the plurality of primary inlet busbars (81).

15. A power distribution cabinet, **characterized by** comprising:
a cabinet body;
a distribution box (100) according to any of claims 1 to 14, wherein the distribution box (100) is coupled to the cabinet body; and
a plurality of drawer assemblies arranged on a side adjacent to the first opening (11) of the distribution box (100), and each of the plurality of drawer assemblies being detachably connected to the cabinet body.
